# EUROPEAN PATENT SPECIFICATION

(11) **EP 3 037 487 B1**
(45) Date of publication and mention of the grant of the patent: **22.11.2017**
(21) Application number: 15199640.2
(22) Date of filing: 11.12.2015
(51) Int. Cl.: C09D 7/02, C09D 7/12, C08K 3/20, C08K 3/22, C08K 3/34, C09D 123/08, C09D 133/08, C09D 161/28, C09D 163/00, C09D 167/00, C09D 175/04, C09D 191/00, C09D 201/00

(54) **A PAINT COMPOSITION AND A METHOD OF FORMING A PAINT COMPOSITION**
FARBZUSAMMENSETZUNG UND VERFAHREN ZUR HERSTELLUNG EINER FARBZUSAMMENSETZUNG
COMPOSITION DE PEINTURE ET PROCÉDÉ DE FORMATION D'UNE COMPOSITION DE PEINTURE

(30) Priority: 23.12.2014 US 201414581074
(43) Date of publication of application: 29.06.2016
(73) Proprietor: Behr Process Corporation, Santa Ana, CA 92704 (US)
(72) Inventor: XUE, Chenchen, Irvine, California 92602 (US); WILLIAMS, Gregory Allen, Laguna Beach, CA 92651-1542 (US); TARNG, Ming-Ren, Irvine, California 92614 (US)
(74) Representative: Beck Greener

(56) References cited:
- DE-A1- 2 417 672
- US-A- 4 220 567
- US-A1- 2007 237 738
- US-A1- 2013 090 418

## Description

The present invention relates to a paint composition and to a method of forming a paint composition.

Coating compositions such as paints are ubiquitous having been developed in prehistoric times. A typical paint composition includes a pigment and other solid components dispersed within a liquid. For example, most paints include a film forming material or binder along with the pigment dispersed within a solvent.

In a paint composition, a pigment is desirably dispersed in a liquid component. When the paint is applied to a substrate, the solvent evaporates leaving behind the solid components. In particular, the pigment and binder coalesce to a continuous film. Although paint technologies are well-developed, imperfections in the compositions and resulting coatings still exist. For example, non-uniform dispersion caused by flocculation and/or settling of the pigment phase may result in several undesirable properties such as a non-uniform appearance and spotty coverage. Another mechanism that produces paint imperfections is the formation of seeds which are small undesirable particles or granules that can also detract from a paint coating's appearance.

Accordingly, there is a need for improved paint compositions with reduced seed formations.

US 2007/237738 A1 discloses a low odor latex paint capable of reducing interior odors. A latex paint composition may include odor absorbing materials, water and a binder, including polymeric binders such as acrylics. Odor absorbing materials include zeolites, cyclodextrins and activated carbon. The "intermediate" silicate/aluminate zeolites are more useful than the "high" zeolites. Zeolites used in the disclosed invention may be in the form of a powder having a particle size that is less than about 40 microns and included in paint formulations of up to about 10 % by weight of total paint formulation.

US 4220567 A discloses a lacquer comprising an organic binder, a pigment or filler, and a zeolite in an amount sufficient to increase the dispersability of the pigment or filler. Preferred synthetic zeolites are zeolite A and faujasite. In the disclosed invention, about 0.5 to 10% by volume of zeolite is added to the pigment or filler, and the average particle size of the zeolite is from about 0.5 to 5 µm.

DE 2417672 A1 discloses a corrosion-protective coating composition which comprises a binder and a zeolite. All types of zeolites containing divalent manganese ions, cobalt ions, zinc ions, or lead ions may be considered for use in corrosion protection according to the disclosed invention. One example of an anti-corrosive composition uses sodium zeolite type A with a 4 angstrom pore diameter.

US 2013/090418 A1 discloses a self-polishing antifouling coating composition suitable for marine applications. The composition comprises a carboxylic acid, a metal oxide compound, a dehydrating agent and a binder.

The present invention solves one or more problems of the prior art by providing, in at least one embodiment, a paint composition with reduced seed formation.

According to a first aspect of the present invention, there is provided a paint composition comprising: a solvent; a polymeric binder; and a plurality of zeolite particles, each zeolite particle defining a plurality of pores therein with an average pore size from about 1 to 100 angstroms and the zeolite particles having exchangeable cations and sequestered cations disposed within the pores, the sequestered cations including Mg²⁺. Advantageously, the paint composition exhibits reduced seed formation by sequestering cations in the paint composition that tend to cause seed formation.

In an embodiment, the zeolite particles have an average size from 0.5 to 10 microns

In an embodiment, the zeolite particles have an average size from 2 to 7 microns.

In an embodiment, the zeolite particles are described by the following formula: nXₚO·mAl₂O₃·oSiO₂ wherein: n is 0.8 to 1.5; m is 0.8 to 1.5; p is 1 to 2; and o is 0.8 to 24.

In an embodiment, the plurality of zeolite particles is present in an amount from about 2 lbs (0.9 kg) per 100 gallons (379 litres) of paint composition to about 15 lbs (6.8 kg) per 100 gallons (379 litres) of paint composition.

In an embodiment, the paint composition has at least one source of atoms or cations that initiate seed formation.

In an embodiment, the cations that initiate seed formation are selected from the group consisting of Mg²⁺, Ca²⁺, Zn²⁺, an combinations thereof.

In an embodiment, the cations that initiate seed formation include Mg²⁺, Ca²⁺, or Zn²⁺.

In an embodiment, the exchangeable cations are sodium cations.

In an embodiment, the polymeric binder includes a component selected from the group consisting of alkyds, acrylics, vinyl-acrylics, vinyl acetate/ethylene (VAE), polyurethanes, polyesters, melamine resins, epoxy, oils, and combinations thereof.

In an embodiment, the paint composition further comprises an additive selected from the group consisting of thickeners, dispersants, surfactants, defoamers, additives, and combinations thereof.

In an embodiment, the paint composition further comprises a pigment.

In an embodiment, the pigment includes a component selected from the group consisting of titanium dioxide, zinc oxide (ZnO), zinc chromate (ZnCrO₄), iron(III) oxide (Fe₂O₃), iron (II) oxide (FeO), organic dyes, carbon black, aluminosilicates, calcium carbonates, attapulgites, talcs, silicas, micas, kaolins, and combinations thereof.

In an embodiment the solvent is water.

According to a second aspect of the present invention, there is provided a method of forming a paint composition, the method comprising: a) combining a solvent, pigments, and a plurality of zeolites together to form a first mixture, each zeolite particle defining a plurality of pores therein with an average pore size from about 1 to 100 angstroms, the zeolite particles having exchangeable cations and sequestered cations disposed within the pores, the sequestered cations including Mg²⁺; and b) adding a binder to the first mixture to form the paint composition, wherein cations that initiate seed formation are at least partially exchanged with exchangeable cations.

In an embodiment, dispersant and defoamer are also combined in step a) to form the first mixture.

In an embodiment, mildewcide and rheology modifiers are also added in step b) to form the paint composition.

In an embodiment, the exchangeable cations are sodium cations and the cations that initiate seed formation are selected from the group consisting of Mg²⁺, Ca²⁺, Zn²⁺, and combinations thereof.

Embodiments of the present invention will now be described in detail with reference to the accompanying drawings in which:

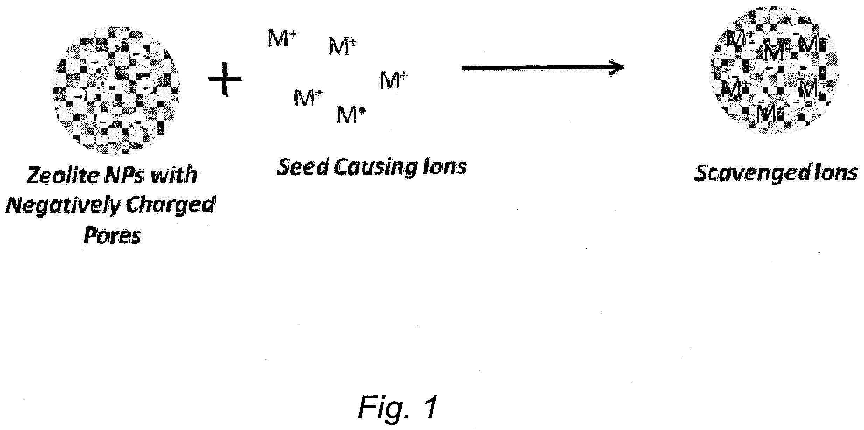

FIGURE 1 is a schematic illustration of the exchange of cations in a zeolite particle.

Reference will now be made in detail to presently preferred compositions, embodiments and methods of the present invention which constitute the best modes of practicing the invention presently known to the inventors. The Figures are not necessarily to scale. However, it is to be understood that the disclosed embodiments are merely exemplary of the invention that may be embodied in various and alternative forms. Therefore, specific details disclosed herein are not to be interpreted as limiting, but merely as a representative basis for any aspect of the invention and/or as a representative basis for teaching one skilled in the art to variously employ the present invention.

Except in the examples, or where otherwise expressly indicated, all numerical quantities in this description indicating amounts of material or conditions of reaction and/or use are to be understood as modified by the word "about" in describing the broadest scope of the invention. Practice within the numerical limits stated is generally preferred. Also, unless expressly stated to the contrary: percent, "parts of," and ratio values are by weight; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed; the first definition of an acronym or other abbreviation applies to all subsequent uses herein of the same abbreviation and applies *mutatis mutandis* to normal grammatical variations of the initially defined abbreviation; and, unless expressly stated to the contrary, measurement of a property is determined by the same technique as previously or later referenced for the same property.

It is also to be understood that this invention is not limited to the specific embodiments and methods described below, as specific components and/or conditions may, of course, vary. Furthermore, the terminology used herein is used only for the purpose of describing particular embodiments of the present invention and is not intended to be limiting in any way.

It must also be noted that, as used in the specification and the appended claims, the singular form "a," "an," and "the" comprise plural referents unless the context clearly indicates otherwise. For example, reference to a component in the singular is intended to comprise a plurality of components.

Throughout this application, where publications are referenced, the disclosures of these publications in their entireties are hereby incorporated by reference into this application to more fully describe the state of the art to which this invention pertains.

The term "binder" as used in at least one embodiment refers to the material that has the binding capability to form a film and contribute to the film integrity and mechanical properties.

The term "particle-size" as used in at least one embodiment refers to the average size of each particle.

The term "Feret diameters" as used in at least one embodiment refers to the distance between two tangents parallel to the opposite sides of a particle or pore.

The term "solids" as used herein means the part of the coating composition that remains on a surface after the solvent and other volatiles has evaporated.

The term "seeds" as used herein mean the small undesirable particles or granules other than dust found in paint. In some variations, the seeds are caused by an agglomeration of pigment particles.

The term "aspect ratio" as used in at least one embodiment refers to the ratio as the ratio of the minimum and maximum Feret diameters of a pore, particle, or air-void. For example, the aspect ratio of a spherical particle is 1. The aspect ratio for a completely compressed particle is nearly zero in the idealized case.

In an embodiment, a paint composition exhibiting reduced seed formation is provided. The paint composition includes a solvent, a polymeric binder, and a plurality of zeolite particles. In a refinement, the paint composition further includes a pigment. Each zeolite particle defines a plurality of pores therein with an average pore size (e.g., average Feret diameter) from about 1 to 100 angstroms and having cations disposed within the pores. In another variation, the plurality of pores has an average pore size (e.g., average Feret diameter) from about 2 to 20 angstroms. In still another variation, the plurality of pores has an average pore size (e.g., average Feret diameter) from about 2 to 4 angstroms. In another variation, the plurality of pores has an average pore size (e.g., average Feret diameter) less than 3 angstroms. The paint composition usually includes at least one source of atoms or cations that initiate seed formation. Examples of such atoms or cations include, but are not limited to, Mg²⁺, Ca²⁺, Zn²⁺, and combinations thereof. Therefore, after formation of the paint composition, these atoms or cations that initiate seed formation are sequestered in the zeolite via exchange with exchangeable cations (e.g., Na⁺). Figure 1 provides a schematic illustration of the exchange of these cations in a zeolite particle.

In a refinement, the polymeric binder is present in an amount from about 30 to 75 weight percent of the total weight of the paint composition. In another refinement, the polymeric binder is present from about 40 to 60 weight percent of the total weight of the paint composition. In yet another refinement, the zeolite particles are present in an amount from about 0.1 to about 20 weight percent of the total weight of the paint composition. In still other refinements, the zeolite particles are present in an amount of at least, in increasing order of preference, 0.1, 0.5, 1.0, 2.0, 3.0, 5.0, 7.0 or 10 weight percent of the total weight of the paint composition. In still other refinements, the zeolite particles are present in an amount of, at most, in increasing order of preference, 20, 15, 10, 9.0, 8.0, 5.0, or 3.0 weight percent of the total weight of the paint composition. Typically, the plurality of zeolite particles is present in an amount from about 2 lbs (0.9 kg) per 100 gallons (379 litres) of paint composition to about 15 lbs (6.8 kg) per 100 (379 litres) gallons of paint composition. As set forth below, the paint composition can include additional additive which in total constitute from 0.5 to 15 weight percent of the paint composition. Finally, the balance of the paint composition is the solvent.

Zeolites are crystalline oxides of aluminum and silicon which occur naturally or are synthetically formed. Typically, the zeolites have a three-dimensional framework with uniformly sized pores crossing the structure. Moreover, depending on the crystalline form and functionality of the zeolites, synthetic zeolites are characterized as P-, A-, X, or Y- zeolites. In a variation of the paint composition, synthetic zeolites are found to be particularly useful. In a refinement, the formula of these synthetic zeolites can be described by the following formula:

nXₚO·mAl₂O₃·oSiO₂

wherein:
n is 0.8 to 1.5;
m is 0.8 to 1.5;
p is 1 to 2 (e.g., 1 or 2) and
o is 0.8 to 24.
X is a metal such as an alkali metal element (Li, Na, K, etc) or an alkaline earth metal (e.g., Mg, Ba, Ca, etc) or a Group 12 element (e.g., Zn). The type of X element, ratio of oxides and the crystal structure make the difference of ion exchange capability. Zeolites have small negative charged pores and positive metal ions that undergo an ion exchange to strongly bind the exchanged metal ions within the zeolite particles such that the bound metal ions can no longer participate in the seed forming reaction. Specifically, the metal atom X is typically located in the pores of the zeolite in cationic form with the O atom in the XₚO having a -2 charge. For A- and P-zeolites, the ratio of Si to Al is about 1 while for X-zeolites and Y-zeolites the ratio of Si to Al is from about 1 to 6. Alternatively, the chemical composition of the zeolite is:

A% XₚO, B% Al₂O₃, C% SiO₂, D% H₂O

wherein p is 1 to 2, A is 10 to 30 weight percent, B is 20 to 40 weight percent, C is 25 to 45 weight percent and D is 10 to 25 weight percent. A representative example of a useful zeolite has the following formula:

Na₂O · 2SiO₂ · Al₂O₃ · 4.5H₂O.

In one refinement, the zeolite particles have an average size (e.g., an average Feret diameter) from 0.5 to 10 microns. In another refinement, the zeolite particles have an average size (e.g., an average Feret diameter) from 2 to 7 microns. Typical, aspect ratios of the zeolite particles is from about 0.7 to about 1.

As set forth above, the paint composition includes a solvent and a binder which is the film forming component of the composition. In many applications, the solvent includes water or is water. Examples of suitable polymeric binders include, but are not limited to, alkyds, acrylics, vinyl-acrylics, vinyl acetate/ethylene (VAE), polyurethanes, polyesters, melamine resins, epoxy, or oils. In some variations, the paint composition also includes one or more of the following additional additives: thickeners, dispersants, surfactants, defoamers, additives, biocides, mildewcides, rheology modifier, and combinations thereof. In a refinement, the total amounts of these additional additives are from about 0.5 to 15 weight percent of the total weight of the paint composition. Examples of useful pigments include, but are not limited to, titanium dioxide, zinc oxide (ZnO), zinc chromate (ZnCrO₄), iron(III) oxide (Fe₂O₃), iron (II) oxide (FeO), organic dyes, carbon black, aluminosilicates, calcium carbonates, attapulgites, talcs, silicas, micas, kaolins and combinations thereof.

In another embodiment, the paint compositions set forth above are made by a two-step process - the grind and the letdown. In the grind step, the solvent (water), a plurality of zeolite particles, dispersant, defoamer, and pigments are mixed together. In the letdown step, the binder, the mildewcide, if present, the rheology modifier, if present, and the biocide, if present, are added to the grind product. The details of the components are set forth above. In a variation of the present method, a solvent, pigments, and a plurality of zeolites are combined together in a first step to form a first mixture. Each zeolite particle defines a plurality of pores therein having an average pore size from about 1 to 100 angstroms. The pores include exchangeable cations (e.g., Na+) disposed therein. A binder is added to the first mixture to form the paint composition. Advantageously, the cations that initiate seed formation are at least partially exchanged with exchangeable cations. In a refinement, the exchangeable cations are sodium cations and the cations that initiate seed formation are selected from the group consisting of Mg²⁺, Ca²⁺, Zn²⁺, and combinations thereof as set forth above. Typically, the additional additives set forth above can also be added in either step. For example, dispersant and defoamer can also be combined in the first step to form the first mixture while mildewcide and rheology modifiers can also added in the second step to form the paint composition.

The following examples illustrate the various embodiments of the present invention. Those skilled in the art will recognize many variations that are within the spirit of the present invention and scope of the claims.

Zeolites from PQ Corporation were evaluated for their potential to scavenge (bind) metal ions which are capable of forming insoluble inorganic particles (referred to as: seeds) in architectural coating formulations. These zeolites are synthetic inorganic particles with a porous structure containing exchangeable sodium, the X element. The sodium ions can exchange with metal ions (such as Mg²⁺, Ca²⁺, Zn²⁺, etc.) that bind more strongly inside the zeolites pore.

**Table 1. The particle sizes of various Zeolites**

| Name | Doucil 4A | Advera 401 | Doucil A 24 | Doucil A28 | Advera PZ |
|---|---|---|---|---|---|
| Zeolite Type | Na-A | Na-A | Na-MAP | Na-MAP | Na-P |
| Particle Size distribution (micron) | 0.5∼10 | similar to 4A | 0.05∼8um | N/A | |
| Media Particle Size (micron) | | 3∼6 | | | 1∼3 |
| D50 (micron) | 3 | | | 1.7 | |
| pore size (Å) | 10 | | 3 | 3 | |

### Experimental

Inductively coupled plasma (ICP) spectrometry was used to determine that the concentration of metal ions in solution decreases upon the addition of zeolites particles. An example of the experimental details for the determination of metal ion concentration reduction is detailed below.

An aqueous metal ion solution was prepared by mixing metal chloride and deionized water. After complete dissolution, the sample was then centrifuged at 9390 rpms for 20 minutes, and then the supernatant was transferred to a separate vessel and acidified to pH < 2 with nitric acid, then analyzed by ICP. This same process was repeated, except that zeolites (Doucil A24 from PQ) were added after complete dissolution of the metal chloride complex and before centrifugation.

In one example, an aqueous solution of MgCl₂ was prepared by mixing 0.19 g of MgCl₂ with 100 g of deionized water. Using ICP, the magnesium concentration was determined to be 473 mg/L. Upon incorporation of 0.5 g of zeolite particles to 100 g of the above MgCl₂ solution, the magnesium ion concentration decreased to 297 mg/L. Upon incorporation of 1.0 g of zeolite particles to 100 g of the above MgCl₂ solution, the magnesium ion concentration decreased to 132 mg/L.

In another example, an aqueous solution of CaCl₂ was prepared by mixing 0.22 g of CaCl₂ with 100 g of deionized water. Using ICP, the magnesium concentration was determined to be 750 mg/L. Upon incorporation of 0.5 g of zeolite particles to 100 g of the above CaCl₂ solution, the magnesium ion concentration decreased to 158 mg/L. Upon incorporation of 1.0 g of zeolite particles to 100 g of the above CaCl₂ solution, the calcium ion concentration decreased to 1.30 mg/L.

In another example, an aqueous solution of ZnCl₂ was prepared by mixing 0.27 g of ZnCl₂ with 100 g of deionized water. Using ICP, the magnesium concentration was determined to be 1170 mg/L. Upon incorporation of 0.5 g of zeolite particles to 100 g of the above ZnCl₂ solution, the magnesium ion concentration decreased to 232 mg/L. Upon incorporation of 1.0 g of zeolite particles to 100 g of the above ZnCl₂ solution, the zinc ion concentration decreased to 0.57 mg/L.

ICP experiments confirm that the metal ion concentration can be decreased when zeolites (Doucil A24 from PQ) are present. This concept was further investigated in actual architectural coating formulations. Doucil A24 zeolites were added to architectural coating formulations at a loading level of 10 lb/100 gal (4.5 kg/379 litres). The Fail Control formulations contain a zinc component that is responsible for causing seeding. The Pass Control does not contain this component, and should form no seeds. The results below confirm that seeds are prevented in the Fail Control and no seeds form with or without the zeolites in the Pass Control.

**Table 2. Seed formation in various paint compositions.**

| | | Semi-Gloss Deep Sample | | | |
|---|---|---|---|---|---|
| Version | | 1 | 2 | 3 | 4 |
| Description | | Pass Control | Fail Control | Pass Control with 10# Doucil A24 | Fail Control with 10# Doucil A24 |
| Seed Check | 3 weeks | no seed | slight seed | no seed | no seed |
| | 4 weeks | no seed | seed | no seed | no seed |
| | 5 weeks | no seed | seed | no seed | no seed |
| | 6 weeks | no seed | seed | no seed | no seed |
| | 7 weeks | no seed | seed | no seed | no seed |
| | 8 weeks | no seed | seed | no seed | no seed |
| | 9 weeks | no seed | seed | no seed | no seed |
| | 10 weeks | no seed | seed | no seed | no seed |
| | 11 weeks | no seed | seed | no seed | no seed |
| | 12 weeks | no seed | seed | no seed | no seed |
| | 13 weeks | no seed | seed | no seed | no seed |

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

Embodiments of the present invention have been described with particular reference to the examples illustrated. However, it will be appreciated that variations and modifications may be made to the examples described within the scope of the present invention.

## Claims

1. A paint composition comprising:
a solvent;
a polymeric binder; and
a plurality of zeolite particles, each zeolite particle defining a plurality of pores therein with an average pore size from about 1 to 100 angstroms, and the zeolite particles having exchangeable cations and sequestered cations disposed within the pores, the sequestered cations including Mg²⁺.

2. The paint composition of claim 1 wherein the zeolite particles have an average size from 0.5 to 10 microns.

3. The paint composition of claim 1 wherein the zeolite particles have an average size from 2 to 7 microns.

4. The paint composition of any of claims 1 to 3 wherein the zeolite particles are described by the following formula:
nXₚO·mAl₂O₃·oSiO₂
wherein:
n is 0.8 to 1.5;
m is 0.8 to 1.5;
p is 1 to 2; and
o is 0.8 to 24.

5. The paint composition of any of claims 1 to 4 wherein the plurality of zeolite particles is present in an amount from about 2 lbs (0.9 kg) per 100 gallons (379 litres) of paint composition to about 15 lbs (6.8 kg) per 100 gallons (379 litres) of paint composition.

6. The paint composition of any of claims 1 to 5 having at least one source of atoms or cations that initiate seed formation.

7. The paint composition of claim 6 wherein the cations that initiate seed formation are selected from the group consisting of Mg²⁺, Ca²⁺, Zn²⁺, and combinations thereof.

8. The paint composition of any of claims 1 to 7 wherein the exchangeable cations are sodium cations.

9. The paint composition of any of claims 1 to 8 wherein the polymeric binder includes a component selected from the group consisting of alkyds, acrylics, vinyl-acrylics, vinyl acetate/ethylene (VAE), polyurethanes, polyesters, melamine resins, epoxy, oils, and combinations thereof.

10. The paint composition of any of claims 1 to 9 further comprising an additive selected from the group consisting of thickeners, dispersants, surfactants, defoamers, additives, and combinations thereof.

11. The paint composition of any of claims 1 to 10 further comprising a pigment.

12. The paint composition of claim 10 wherein the pigment includes a component selected from the group consisting of titanium dioxide, zinc oxide (ZnO), zinc chromate (ZnCrO₄), iron(III) oxide (Fe₂O₃), iron (II) oxide (FeO), organic dyes, carbon black, aluminosilicates, calcium carbonates, attapulgites, talcs, silicas, micas, kaolins, and combinations thereof.

13. The paint composition of any of claims 1 to 12, wherein the solvent is water..

14. A method of forming a paint composition, the method comprising:
a) combining a solvent, pigments, and a plurality of zeolites together to form a first mixture, each zeolite particle defining a plurality of pores therein with an average pore size from about 1 to 100 angstroms, the zeolite particles having exchangeable cations and sequestered cations disposed within the pores, the sequestered cations including Mg²⁺; and
b) adding a binder to the first mixture to form the paint composition, wherein cations that initiate seed formation are at least partially exchanged with exchangeable cations.

15. The method of claim 14 wherein dispersant and defoamer are also combined in step a) to form the first mixture.

16. The method of any of claims 14 and 15 wherein mildewcide and rheology modifiers are also added in step b) to form the paint composition.

17. The method of any of claims 14 to 16 wherein the exchangeable cations are sodium cations and the cations that initiate seed formation are selected from the group consisting of Mg²⁺, Ca²⁺, Zn²⁺, and combinations thereof.

## Patentansprüche

1. Farbzusammensetzung, umfassend:
ein Lösungsmittel;
ein polymeres Bindemittel; und
eine Vielzahl von Zeolithteilchen, wobei jedes Zeolithteilchen eine Vielzahl von Poren darin mit einer durchschnittlichen Porengröße von etwa 1 bis 100 Angström definiert und die Zeolithteilchen austauschbare Kationen und sequestrierte Kationen in den Poren angeordnet haben, wobei die sequestrierten Kationen Mg²⁺ beinhalten.

2. Farbzusammensetzung nach Anspruch 1, wobei die Zeolithteilchen eine durchschnittliche Größe von 0,5 bis 10 Mikron aufweisen.

3. Farbzusammensetzung nach Anspruch 1, wobei die Zeolithteilchen eine durchschnittliche Größe von 2 bis 7 Mikron aufweisen.

4. Farbzusammensetzung nach einem der Ansprüche 1 bis 3, wobei die Zeolithteilchen durch die folgende Formel beschrieben werden:
nXₚO·mAl₂O₃·oSiO₂,
wobei:
n für 0,8 bis 1,5 steht;
m für 0,8 bis 1,5 steht;
p für 1 bis 2 steht; und
o für 0,8 bis 24 steht.

5. Farbzusammensetzung nach einem der Ansprüche 1 bis 4, wobei die Vielzahl von Zeolithteilchen in einer Menge von etwa 2 Pfund (0,9 kg) pro 100 Gallonen (379 Liter) der Farbzusammensetzung bis etwa 15 Pfund (6,8 kg) pro 100 Gallonen (379 Liter) der Farbzusammensetzung vorhanden ist.

6. Farbzusammensetzung nach einem der Ansprüche 1 bis 5, die zumindest eine Quelle für Atome oder Kationen aufweist, die Keimbildung einleitet.

7. Farbzusammensetzung nach Anspruch 6, wobei die Kationen, die Keimbildung einleiten, aus der Gruppe bestehend aus Mg²⁺, Ca²⁺, Zn²⁺ und Kombinationen davon ausgewählt sind.

8. Farbzusammensetzung nach einem der Ansprüche 1 bis 7, wobei die austauschbaren Kationen Natriumkationen sind.

9. Farbzusammensetzung nach einem der Ansprüche 1 bis 8, wobei das polymere Bindemittel eine Komponente beinhaltet, die aus der Gruppe bestehend aus Alkyden, Acrylen, Vinyl-Acrylen, Venylacetat/-ethylen (VAE), Polyurethanen, Polyestern, Melaminharzen, Epoxid, Ölen und Kombinationen davon ausgewählt ist.

10. Farbzusammensetzung nach einem der Ansprüche 1 bis 9, die ferner ein aus der Gruppe bestehend aus Verdickungsmitteln, Dispergiermitteln, Tensiden, Entschäumern, Additiven und Kombinationen davon ausgewähltes Additiv umfasst.

11. Farbzusammensetzung nach einem der Ansprüche 1 bis 10, die ferner ein Pigment umfasst.

12. Farbzusammensetzung nach Anspruch 10, wobei das Pigment eine aus der Gruppe bestehend aus Titandioxid, Zinkoxid (ZnO), Zinkchromat (ZnCrO₄), Eisen(III-)oxid (Fe₂O₃), Eisen(II)-oxid (FeO), organischen Farbstoffen, Rußschwarz, Aluminosilikaten, Calciumcarbonaten, Attapulgiten, Talken, Kieselsäuren, Glimmern, Kaolinen und Kombinationen davon ausgewählte Komponente ist.

13. Farbzusammensetzung nach einem der Ansprüche 1 bis 12, wobei das Lösungsmittel Wasser ist.

14. Verfahren zum Bilden einer Farbzusammensetzung, wobei das Verfahren Folgendes umfasst:
a) Kombinieren von einem Lösungsmittel, Pigmenten und einer Vielzahl von Zeolithteilchen, um ein erstes Gemisch zu bilden, wobei jedes Zeolithteilchen eine Vielzahl von Poren darin mit einer durchschnittlichen Porengröße von etwa 1 bis 100 Angström definiert und die Zeolithteilchen austauschbare Kationen und sequestrierte Kationen in den Poren angeordnet haben, wobei die sequestrierten Kationen Mg²⁺ beinhalten; und
b) Hinzufügen eines Bindemittels zu dem ersten Gemisch, um die Farbzusammensetzung zu bilden, wobei Kationen, die Keimbildung einleiten, zumindest teilweise durch austauschbare Kationen ausgetauscht werden.

15. Verfahren nach Anspruch 14, wobei ein Dispergiermittel und Entschäumer in Schritt a) ebenfalls kombiniert werden, um das erste Gemisch zu bilden.

16. Verfahren nach einem der Ansprüche 14 und 15, wobei Mehltau- und Rheologiemodifikatoren in Schritt b) ebenfalls hinzugefügt werden, um die Farbzusammensetzung zu bilden.

17. Verfahren nach einem der Ansprüche 14 bis 16, wobei die austauschbaren Kationen Natriumkationen sind und die Kationen, die Keimbildung einleiten, aus der Gruppe bestehend aus Mg²⁺, Ca²⁺, Zn²⁺ und Kombinationen davon ausgewählt sind.

## Revendications

1. Composition de peinture comprenant :
un solvant ;
un liant polymère ; et
une pluralité de particules de zéolite, chaque particule de zéolite définissant une pluralité de pores en son sein avec une taille moyenne de pore d'environ 1 à 100 angströms, et les particules de zéolite comportant des cations échangeables et des cations séquestrés disposés au sein des pores, les cations séquestrés comprenant Mg²⁺.

2. Composition de peinture selon la revendication 1, lesdites particules de zéolite présentant une taille moyenne allant de 0,5 à 10 microns.

3. Composition de peinture selon la revendication 1, lesdites particules de zéolite présentant une taille moyenne allant de 2 à 7 microns.

4. Composition de peinture selon l'une quelconque des revendications 1 à 3, lesdites particules de zéolite étant décrites par la formule suivante :
nXₚO·mAl₂O₃·oSiO₂
dans laquelle :
n vaut 0,8 à 1,5 ;
m vaut 0,8 à 1,5 ;
p vaut 1 à 2 ; et
o vaut 0,8 à 24.

5. Composition de peinture selon l'une quelconque des revendications 1 à 4, ladite pluralité de particules de zéolite étant présente en une quantité d'environ 0,9 kg (2 lbs) pour 379 litres (100 gallons) de composition de peinture à environ 6,8 kg (15 lbs) pour 379 litres (100 gallons) de composition de peinture.

6. Composition de peinture selon l'une quelconque des revendications 1 à 5 contenant au moins une source d'atomes ou de cations qui initient la formation de grains.

7. Composition de peinture selon la revendication 6, lesdits cations qui initient la formation de grains étant choisis dans le groupe constitué par Mg²⁺, Ca²⁺, Zn²⁺ et des combinaisons de ceux-ci.

8. Composition de peinture selon l'une quelconque des revendications 1 à 7, lesdits cations échangeables étant des cations de sodium.

9. Composition de peinture selon l'une quelconque des revendications 1 à 8, ledit liant polymère comprenant un composant choisi dans le groupe constitué par les alkydes, les acryliques, les acryliques de vinyle, l'acétate de vinyle/éthylène (VAE), les polyuréthanes, les polyesters, les résines de mélamine, un époxyde, les huiles, et des combinaisons de ceux-ci.

10. Composition de peinture selon l'une quelconque des revendications 1 à 9 comprenant en outre un additif choisi dans le groupe constitué par les épaississants, les dispersants, les tensioactifs, les agents antimousse, les additifs, et des combinaisons de ceux-ci.

11. Composition de peinture selon l'une quelconque des revendications 1 à 10 comprenant en outre un pigment.

12. Composition de peinture selon la revendication 10, ledit pigment comprenant un composant choisi dans le groupe constitué par le dioxyde de titane, l'oxyde de zinc (ZnO), le chromate de zinc (ZnCrO₄), l'oxyde de fer(III) (Fe₂O₃), l'oxyde de fer(II) (FeO), les colorants organiques, le noir de carbone, les aluminosilicates, les carbonates de calcium, les attapulgites, les talcs, les silices, les micas, les kaolins, et des combinaisons de ceux-ci.

13. Composition de peinture selon l'une quelconque des revendications 1 à 12, ledit solvant étant de l'eau.

14. Procédé de formation d'une composition de peinture, le procédé comprenant :
a) la combinaison d'un solvant, de pigments et d'une pluralité de zéolites ensemble pour former un premier mélange, chaque particule de zéolite définissant une pluralité de pores en son sein avec une taille moyenne de pore d'environ 1 à 100 angströms, les particules de zéolite comportant des cations échangeables et des cations séquestrés disposés au sein des pores, les cations séquestrés comprenant Mg²⁺; et
b) l'ajout d'un liant au premier mélange pour former la composition de peinture, lesdits cations qui initient la formation de grains étant au moins en partie échangés avec des cations échangeables.

15. Procédé selon la revendication 14, ledit dispersant et ledit agent antimousse étant également combinés dans l'étape a) pour former le premier mélange.

16. Procédé selon l'une quelconque des revendications 14 et 15, un agent anticryptogamique et des modificateurs de rhéologie étant également ajoutés dans l'étape b) pour former la composition de peinture.

17. Procédé selon l'une quelconque des revendications 14 à 16, lesdits cations échangeables étant des cations de sodium et lesdits cations qui initient la formation de grains étant choisis dans le groupe constitué par Mg²⁺, Ca²⁺, Zn²⁺, et des combinaisons de ceux-ci.
